# EUROPEAN PATENT APPLICATION

(11) **EP 1 643 662 A1**
(43) Date of publication of application: **05.04.2006**
(21) Application number: 03741256.6
(22) Date of filing: 07.07.2003
(51) Int. Cl.: H04B 7/26

(54) **MOBILE COMMUNICATION STATION, COMMUNICATION METHOD, AND COMMUNICATION SYSTEM**

(71) Applicant: MITSUBISHI DENKI KABUSHIKI KAISHA, Tokyo 100-8310 (JP)
(72) Inventor: NEMOTO, Masaaki, Mitsubishi Denki Kabushiki Kaisha, Chiyoda-ku, Tokyo 100-8310 (JP)
(74) Representative: Sajda, Wolf E.
(86) International application number: PCT/JP2003/008633
(87) International publication number: WO 2005/004353

(57) **Abstract**

An object of the present invention is to provide a mobile station, a telecommunications method and a telecommunications system employing a MT-TA Interface description capable of dealing with a handover between different wireless communications methods. In order to attain the aforementioned object, for example, when a wireless channel control part (MTF1) 1 receives a handover request from a corresponding mobile network (NW1) 7, a wireless channel control part (MTF2) 2 communicates with a corresponding mobile network (NW2) 8 to complete a handover procedure on a wireless channel, and a common adaptor part (TAF) 3 switches to a communication with the wireless channel control part (MTF2) 2.

## Description

### Technical Field

The present invention relates to mobile communications, and in particular, a mobile station, a telecommunications method and a telecommunications system capable of dealing with a handover between different wireless communications methods.

### Background Art

The following non-patent document 1 defines descriptions of a logical interface (MT-TA Interface) between an MT (Mobile Termination) which is a termination part of a wireless channel in a mobile station and a TA (Terminal Adaptor) which is an adopter part of a mobile station. The TA functions as an adaptor between the MT and a TE (Terminal Equipment) which includes an HMI (Human Machine Interface) such as a display and a microphone.

3.2. Configuration, Figure 3.2-1 Configuration of MT and TA of the non-patent document 1 shows an exemplary configuration of a mobile station. As shown in the Figure, an ME (Mobile Equipment) which is a component of the mobile station is provided with various function blocks therein. The function blocks include a TAF (TA Function) which is an adaptor part with an adaptor function similar to TA, a UIMF (User Identity Module Function) with a user identification function, and the MT. Further, an MTF (MT Function) which is a wireless channel control part exits inside the MT in the Figure.

For a situation where the wireless channel control parts (MTF) of different wireless communications methods (for example, GSM (Global System for Mobile communications) system which are a previous-generation method and an IMT-2000 (International Mobile Telecommunication 2000) system which is a next-generation method) are respectively provided inside the mobile station, the MT-TA Interface description defined by the non-patent document 1 does not include definition of a procedure regarding a handover between different methods and of a message description in the MT-TA Interface.

Therefore, there was a problem that the mobile station provided logically or physically with wireless channel control parts (MTF) of different methods and employing the MT-TA Interface description could not execute a handover between different methods.

It is noted that for a mobile station which does not employ the MT-TA Interface description defined by the non-patent document 1, for example, a mobile station which employs a Radio Interface Protocol Architecture defined by the following non-patent document 2, definition is not given regarding a procedure for a handover between different methods and of a message description.

The following patent document 1 discloses a conventional technique related to a handover between different methods. However, the technique disclosed in the patent document 1 does not teach a handover between different methods in a mobile station which employs the MT-TA Interface description as defined by the non-patent document 1. Further, the technique disclosed in the patent document 1 takes no measure for a situation where a user hears an unpleasant noise upon a handover.
Non-patent document 1
   ARIB TR-T12-27.A02 V3.4.0 MT-TA Interface Description, Internet <URL: http://www.arib.or.jp/IMT-2000/V330Mar03/T12/0_T12coverV330.html>
Non-patent document 2
   3GPP TS25.301 V5.2.0 Radio Interface Protocol Architecture, Internet <URL: http://www.3gpp.org/ftp/Specs/html-info/25301.html>
Patent document 1
   Japanese Patent Application Laid-Open No. 2001-036937

### Disclosure of Invention

The present invention is to provide a mobile station, a telecommunications method and a telecommunications system for solving the above-mentioned problems wherein the MT-TA Interface description as defined by the non-patent document 1 is employed and further a handover between different wireless communications methods can be executed.

Moreover, the present invention is to provide a mobile station, a telecommunications method and a telecommunications system wherein a user hears no unpleasant noise upon a handover between different methods.

A first aspect of a mobile station according to the present invention is a mobile station employing an MT-TA Interface description defined by ARIB (Association of Radio Industries and Businesses) TR-T12-27.A02. The mobile station includes a plurality of MTFs (Mobile Termination Function) and a TAF (Terminal Adaptation Function) which is an adaptor portion between a TE (Terminal Equipment) having an HMI (Human Machine Interface) and each of the plurality of MTFs. Each of the plurality of MTFs is a wireless channel control part employing a different wireless communications method. One of the plurality of MTFs, when receiving a handover request from a corresponding network, transmits to another of the plurality of MTFs and to the TAF notifications that a handover procedure to another of the plurality of MTFs is started. Another of the plurality of MTFs, upon receiving the handover procedure start notification, communicates with another corresponding network to complete a handover procedure on a wireless channel, and transmits to the TAF a notification that the handover procedure on the wireless channel is completed. The TAF, upon receiving the handover procedure start notification, pauses a communication with the one of the plurality of MTFs, and after receiving the handover procedure on the wireless channel complete notification, switches to a communication with another of the plurality of MTFs.

A first aspect of a telecommunications method according to the present invention is a telecommunications method using a mobile station employing an MT-TA Interface description defined by ARIB (Association of Radio Industries and Businesses) TR-T12-27.A02. The mobile station includes a plurality of MTFs (Mobile Termination Function) and a TAF (Terminal Adaptation Function) which is an adaptor portion between a TE (Terminal Equipment) having an HMI (Human Machine Interface) and each of the plurality of MTFs. Each of the plurality of MTFs is a wireless channel control part employing a different wireless communications method. The telecommunications method includes the following steps (a) through (c). The step (a) is to prompt one of the plurality of MTFs to transmit to another of the plurality of MTFs and to the TAF notifications that a handover procedure to another of the plurality of MTFs is started, when the one of the plurality of MTFs receives a handover request from a corresponding network. The step (b) is to prompt another of the plurality of MTFs to communicate with another corresponding network to complete a handover procedure on a wireless channel, and transmit to the TAF a notification that the handover procedure on the wireless channel is completed, when another of the plurality of MTFs receives the handover procedure start notification. The step (c) is to prompt the TAF to pause a communication with the one of the plurality of MTFs when the TAF receives the handover procedure start notification, and to switch to a communication with another of the plurality of MTFs when the TAF receives the notification that the handover procedure on the wireless channel is completed.

A first aspect of a telecommunications system according to the present invention includes a mobile station employing an MT-TA Interface description defined by ARIB (Association of Radio Industries and Businesses) TR-T12-27.A02, a network, and another network. The mobile station includes a plurality of MTFs (Mobile Termination Function), and a TAF (Terminal Adaptation Function) which is an adaptor portion between a TE (Terminal Equipment) having an HMI (Human Machine Interface) and each of the plurality of MTFs. Each of the plurality of MTFs is a wireless channel control part employing a different wireless communications method. One of the plurality of MTFs, when receiving a handover request from the corresponding network, transmits to another of the plurality of MTFs and to the TAF notifications that a handover procedure to another of the plurality of MTFs is started. Another of the plurality of MTFs, upon receiving the handover procedure start notification, communicates with another corresponding network to complete a handover procedure on a wireless channel, and transmits to the TAF a notification that the handover procedure on the wireless channel is completed. The TAF, upon receiving the handover procedure start notification, pauses a communication with the one of the plurality of MTFs, and upon receiving the notification that the handover procedure on the wireless channel is completed, switches to a communication with another of the plurality of MTFs.

According to the first aspect of the mobile station, the telecommunications method and the telecommunications system of the present invention, when the one of the plurality of MTFs receives the handover request from the corresponding network, another of the plurality of MTFs communicates with the corresponding network to complete a handover procedure on a wireless channel, and the TAF switches to a communication with another of the plurality of MTFs. Therefore, the handover between different methods in the mobile station employing the MT-TA interface description can be executed appropriately.

A second aspect of the mobile station according to the present invention includes a plurality of wireless channel control parts and a voice communication control part for controlling a voice CODEC. Each of the plurality of wireless channel control parts is a wireless channel control part employing a different wireless communications method. One of the plurality of wireless channel control parts, when receiving a handover request from a corresponding network, transmits to another of the plurality of wireless channel control parts and to the voice communication control part notifications that a handover procedure to another of the plurality of wireless channel control parts is started. Another of the plurality of wireless channel control parts, upon receiving the handover procedure start notification, communicates with another corresponding network to complete a handover procedure on a wireless channel. The voice communication control part, upon receiving the handover procedure start notification, pauses a communication between the one of the plurality of wireless channel control parts and the voice communication control part and applies a mute control to the voice CODEC so as not to output a sound, and when the handover procedure on the wireless channel is completed, switches to a communication between another of the plurality of wireless channel control parts and the voice communication control part and removes the mute control to the voice CODEC.

A second aspect of the telecommunications method according to the present invention is a telecommunications method using a mobile station. The mobile station includes a plurality of wireless channel control parts and a voice communication control part for controlling a voice CODEC. Each of the plurality of wireless channel control parts is a wireless channel control part employing a different wireless communications method. The telecommunications method includes the following steps (a) through (c). The step (a) is to prompt one of the plurality of wireless channel control parts to transmit to another of the plurality of wireless channel control parts and to the voice communication control part notifications that a handover procedure to another of the plurality of wireless channel control parts is started, when the one of the plurality of wireless channel control parts receives a handover request from a corresponding network. The step (b) is to prompt another of the plurality of wireless channel control parts to communicate with another corresponding network to complete a handover procedure on a wireless channel, when another of the plurality of wireless channel control parts receives the handover procedure start notification. The step (c) is to prompt the voice communication control part to pause a communication between the one of the plurality of wireless channel control parts and the voice communication control part and apply a mute control to the voice CODEC so as not to output a sound when the voice communication control part receives the handover procedure start notification, and switch to a communication between another of the plurality of wireless channel control parts and the voice communication control part and remove the mute control to the voice CODEC, upon completion of the handover procedure on the wireless channel.

A second aspect of the telecommunications system according to the present invention includes a mobile station, a network, and another network. The mobile station includes a plurality of wireless channel control parts and a voice communication control part for controlling a voice CODEC. Each of the plurality of wireless channel control parts is a wireless channel control part employing a different wireless communications method. One of the plurality of wireless channel control parts, when receiving a handover request from the corresponding network, transmits to another of the plurality of wireless channel control parts and to the voice communication control part notifications that a handover procedure to another of the plurality of wireless channel control parts is started. Another of the plurality of wireless channel control parts, upon receiving the handover procedure start notification, communicates with another corresponding network to complete a handover procedure on a wireless channel. The voice communication control part, upon receiving the handover procedure start notification, pauses a communication between the one of the plurality of wireless channel control parts and the voice communication control part and applies a mute control to the voice CODEC so as not to output a sound, and upon completion of the handover procedure on the wireless channel, switches to a communication between another of the plurality of wireless channel control parts and the voice communication control part and removes the mute control to the voice CODEC.

According to the second aspect of the mobile station, the telecommunications method and the telecommunications system of the present embodiment, when the one of the plurality of the wireless channel control parts receives the handover request from the corresponding network, another of the plurality of the wireless channel control parts communicates with the corresponding another network to complete the handover procedure on wireless channel. Then, the voice communication control part applies a mute control to the voice CODEC so as not to output a sound. When the handover procedure on wireless channel is completed, the voice communication control part switches to a communication between another of the plurality of the wireless channel control parts and the voice communication control part, and removes the mute control to the voice CODEC. In this way, an unpleasant noise upon a handover is not heard by a user.

These and other objects, features, aspects and advantages of the present invention will become more apparent from the following detailed description of the present invention when taken in conjunction with the accompanying drawings.

### Brief Description of Drawings

Fig. 1 is a sequence flow illustrating a handover between different methods executed by a mobile station according to a first embodiment of the present invention.
Fig. 2 illustrates a structure of the mobile station and a telecommunications system according to the first to a third embodiments of the present invention.
Fig. 3 is a flow chart illustrating processes of an MTF1 according to the first embodiment of the present invention.
Fig. 4 is a flow chart illustrating processes of an MTF2 according to the first embodiment of the present invention.
Fig. 5 is a flow chart illustrating processes of a common TAF according to the first embodiment of the present invention.
Fig. 6 is a sequence flow illustrating a handover between different methods executed by the mobile station according to a second embodiment of the present invention.
Fig. 7 is a flow chart illustrating processes of the MTF1 according to the second embodiment of the present invention.
Fig. 8 is a flow chart illustrating processes of the common TAF according to the second embodiment of the present invention.
Fig. 9 is a sequence flow illustrating a handover between different methods executed by the mobile station according to a third embodiment of the present invention.
Fig. 10 is a flow chart illustrating processes of the MTF1 according to the third embodiment of the present invention.
Fig. 11 is a flow chart illustrating processes of the MTF2 according to the third embodiment of the present invention.
Fig. 12 is a flow chart illustrating processes of the common TAF according to the third embodiment of the present invention.
Fig. 13 illustrates a structure of the mobile station and the telecommunications system according to the fourth embodiment of the present invention.
Fig. 14 is a sequence flow illustrating a handover between different methods executed by the mobile station according to the fourth embodiment of the present invention.
Fig. 15 is a flow chart illustrating processes of a voice CODEC according to the fourth embodiment of the present invention.

### Best Mode(s) for Carrying Out the Invention

### First Embodiment

The present embodiment relates to a mobile station employing the MT-TA Interface description defined by the non-patent document 1, a telecommunications method using the mobile station, and a telecommunications system including the mobile station. The present embodiment makes it possible to execute a handover between MTFs employing a different wireless communications method.

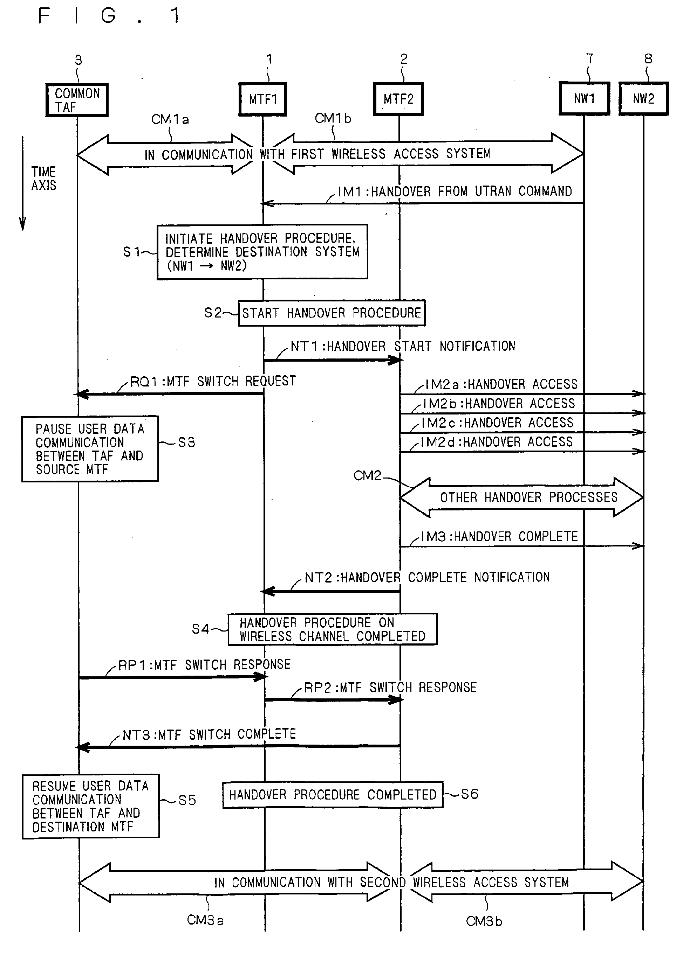

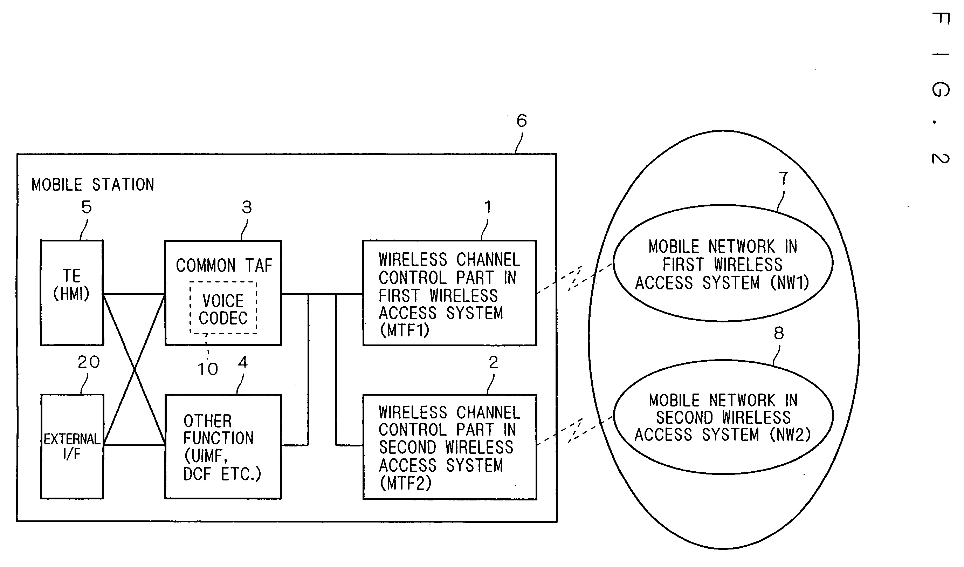

Fig. 1 is a sequence flow illustrating a handover between different methods executed by the mobile station and the telecommunications system according to the present embodiment. Fig. 2 illustrates a structure of the mobile station and the telecommunications system according to the first and third embodiments.

As shown in Fig. 2, a mobile station 6 communicates with a mobile network (NW1) 7 employing a first wireless communications method (for example, the previous-generation GSM method) and a mobile network (NW2) 8 employing a second wireless communications method (for example, the next-generation IMT-2000 method), through wireless channel control parts (MTF1, MTF2) 1, 2 of respective wireless communications methods (that is, wireless access system).

Figs. 1 and 2 illustrate a first and a second wireless access systems, that is, two kinds of wireless access systems. However, this is not restrictive and MTFs and mobile networks belonging to more than two kinds of wireless access systems may be present.

In addition to the above-mentioned wireless channel control parts (MTF1, MTF2) 1, 2, the mobile station 6 includes a common adapter part (TAF) 3, other function block 4, a TE (HMI) 5, and an external interface 20. The TE (HMI) 5 refers to a device serving as an interface for human perceptions, for example, a control panel, a microphone and a speaker of a cellular phone. Further, the external interface 20 refers to an interface such as a USB (Universal Serial Bus) for connecting an external device such as a personal computer with the mobile station 6.

The wireless channel control part 1 and the wireless channel control part 2 communicate with mobile networks 7, 8 in respective wireless access systems in cooperation with the common adapter part (TAF) 3.

In order to provide the mobile station 6 with a voice communication function, a voice CODEC 10 is provided inside the common adapter part (TAF) 3. Although one common adapter part (TAF) 3 is provided inside the mobile station 6 in Fig. 2, a plurality of common adapter parts (TAF) may be provided.

Fig. 1 illustrates a handover executed between different methods from states CM1a, CM1b where the common adapter part (TAF) 3 is in communication with the mobile network (NW1) 7 in the first wireless access system via the wireless channel control part (MTF1) 1 in the first wireless access system to the mobile network (NW2) 8 in the second wireless access system via the wireless channel control part (MTF2) 2 of the second wireless access system.

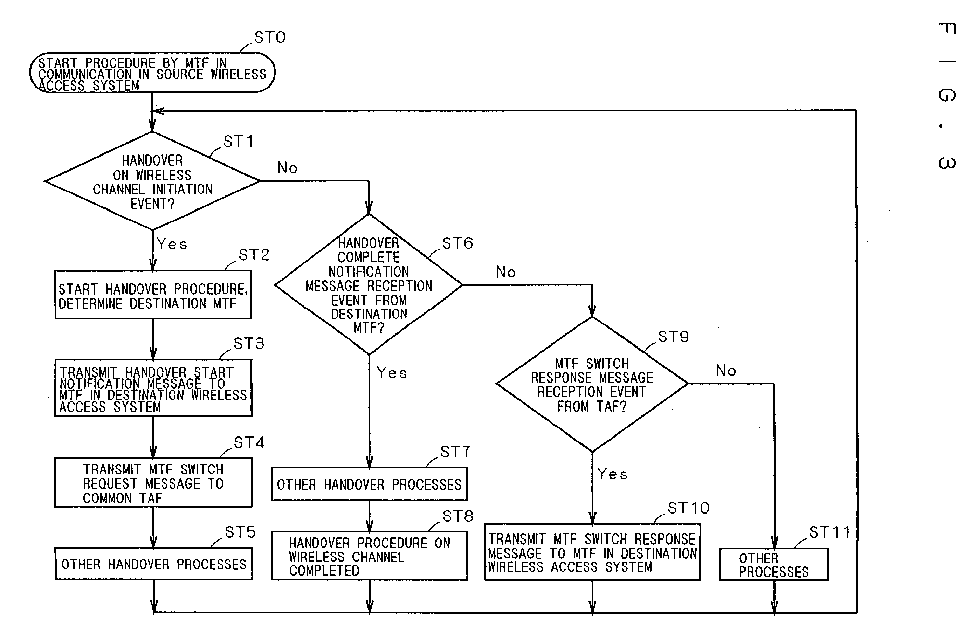

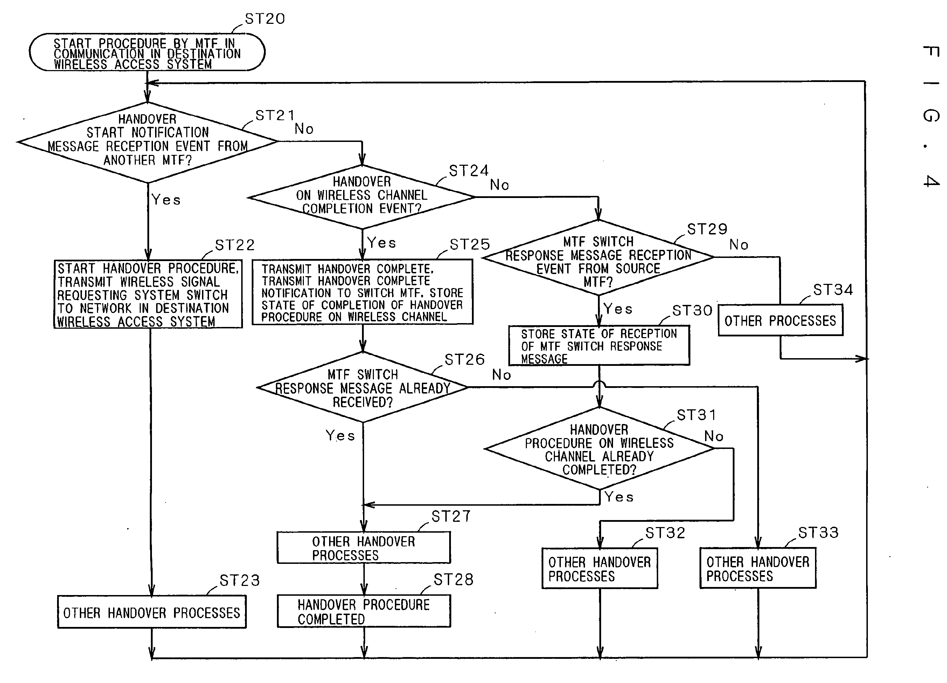

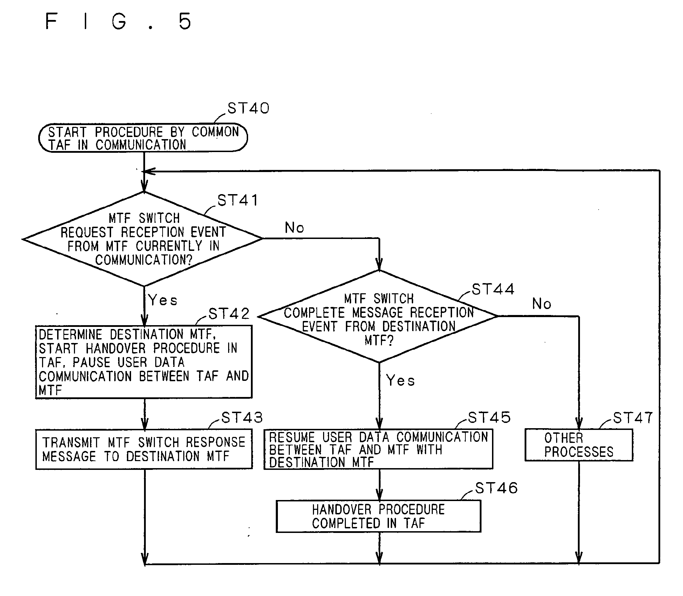

Fig. 3 is a flow chart illustrating processes of the wireless channel control part (MTF1) 1 in the sequence flow of Fig 1. Fig. 4 is a flow chart illustrating processes of the wireless channel control part (MTF2) 2 in the sequence flow of Fig 1. Fig. 5 is a flow chart illustrating processes of the common (TAF) 3 in the sequence flow of Fig 1.

Next, description of operation is given.

In Fig. 1, the wireless channel control part (MTF1) 1 which is a source MTF receives from the mobile network (NW1) 7 a wireless signal for initiating a handover, for example, a HANDOVER FROM UTRAN COMMAND message IM1 defined by 3GPP TS25.331. Upon receiving the signal, the wireless channel control part (MTF1) 1 initiates a handover procedure, determines a destination wireless access system, and determines a destination MTF inside the mobile station (Fig. 1, step S1; Fig. 3, steps ST0, ST1 to ST2).

Next, the handover procedure is started between the wireless channel control part (MTF1) 1 and the wireless channel control part (MTF2) 2 (Fig. 1, step S2). In this embodiment, the wireless channel control part (MTF2) 2 which belongs to the second wireless access system including the mobile network (NW2) 8 is the destination MTF. Therefore, the wireless channel control part (MTF1) 1 transmits a handover start notification message NT1 to the wireless channel control part (MTF2) 2 (Fig. 3, step ST3).

When the wireless channel control part (MTF1) 1 and the wireless channel control part (MTF2) 2 logically (but not physically) exist inside the mobile station (when MTF1 and MTF2 are software modules both operating on one CPU (Central Processing Unit), for example), it is possible for the wireless channel control part (MTF1) 1 to notify the wireless channel control part (MTF2) 2 that the handover started without transmitting the handover start notification message NT1. This is because the handover start notification can be made on software from the wireless channel control part (MTF1) 1 to the wireless channel control part (MTF2) 2.

The wireless channel control part (MTF1) 1 notifies the common adapter part (TAF) 3 currently in communication of an MTF switch request message RQ1 including information on the destination MTF (Fig. 3, step ST4). Further, other handover processes are executed, including securing signal synchronization with a source base station and measuring receiving electric field (Fig. 3, step ST5). After executing other handover processes, the procedure goes back to a determination process of the step ST1.

When the wireless channel control part (MTF2) 2 receives the handover start notification message NT1 from the wireless channel control part (MTF1) 1, the wireless channel control part (MTF2) 2 starts the handover procedure and transmits to the mobile network (NW2) 8 a wireless signal for switching wireless access systems, for example, HANDOVER ACCESS messages IM2a to IM2d defined by 3GPP TS04.18 (Fig. 4, steps ST20, ST21 to ST22).

According to the definition by 3GPP TS04.18, this message is transmitted four times and Fig. 1 shows four HANDOVER ACCESS messages IM2a to IM2d. However, the number of the messages can be smaller by omission. Further, after transmitting HANDOVER ACCESS messages IM2a to IM2d, other handover processes CM2 are executed (Fig. 4, step ST23). After performing other handover processes, the procedure goes back to the determining process of the step ST21.

When the handover procedure between the wireless channel control part (MTF2) 2 and the mobile network (NW2) 8 succeeds, the wireless channel control part (MTF2) 2 transmits a wireless signal to the mobile network (NW2) 8 that the handover is completed, for example, a HANDOVER COMPLETE message IM3 defined by 3GPP TS04.18. Further, the wireless channel control part (MTF2) 2 transmits to the wireless channel control part (MTF1) 1 which is the source MTF a handover complete notification message NT2 for notifying the completion of the handover procedure on the wireless channel (Fig. 4, steps ST24 to ST25). The wireless channel control part (MTF2) 2 stores a state of the various settings at the time of the completion of the handover procedure.

When the wireless channel control part (MTF1) 1 and the wireless channel control part (MTF2) 2 logically (but not physically) exist inside the mobile station, it is possible for the wireless channel control part (MTF2) 2 to notify the wireless channel control part (MTF1) 1 of the completion of handover without transmitting the handover complete notification message NT2. This is because the notification of handover completion can be made on software from the wireless channel control part (MTF2) 2 to the wireless channel control part (MTF1) 1.

Upon receiving the handover complete notification message NT2 from the wireless channel control part (MTF2) 2, the wireless channel control part (MTF1) 1 executes other handover processes. This completes the handover procedure on the wireless channel (Fig. 1, step S4; Fig. 3, steps ST6 to ST7, ST8). Afterwards, the procedure goes back to the determining process of the step ST1.

When receiving the MTF switch request message RQ1 from the wireless channel control part (MTF1) 1, the common adapter part (TAF) 3 determines the destination MTF based on information regarding the destination MTF included in the message and pauses a user data (U-plane) communication between the source MTF and the common adapter part (TAF) (Fig. 1, step S3; Fig. 5, steps ST40, ST41 to ST 42). The user data here refers to voice data or packet data.

Next, the common adapter part (TAF) 3 transmits an MTF switch response message RP1 to the wireless channel control part (MTF1) 1, and prompts the wireless channel control part (MTF1) 1 to transmit an MTF switch response message RP2 to the wireless channel control part (MTF2) 2 which is the destination MTF (Fig. 5, step ST43). Afterwards, the procedure goes back to the determination process of the step ST41.

Upon receiving the MTF switch response message RP1 transmitted from the common adapter part (TAF) 3, the wireless channel control part (MTF1) 1 transmits the MTF switch response message RP2 to the wireless channel control part (MTF2) 2 which is the destination MTF (Fig. 3, steps ST9 to ST10). Afterwards, the procedure goes back to the determination process of the step ST1.

In this embodiment, the MTF switch response message RP1 transmitted from the common adapter part (TAF) 3 is received by the intervening wireless channel control part (MTF1) 1, which then transmits the MTF switch response message RP2 to the wireless channel control part (MTF2) 2. However, the MTF switch response message RP1 may be broadcasted by the common adapter part (TAF) 3 to both the wireless channel control part (MTF1) 1 and the wireless channel control part (MTF2) 2.

Moreover, when steps ST1, ST6, and ST9 of Fig. 3 all render No, other processes unrelated to handover (for example, a call placement process by the MTF1 when a user begins a call placement operation) are executed (Fig. 3, step ST11). Afterwards, the procedure goes back to the determination process of the step ST1.

When the handover procedure is completed between the wireless channel control part (MTF2) 2 and the mobile network (NW2) 8, and the wireless channel control part (MTF2) 2 receives the MTF switch response message RP2 transmitted from the common adapter part (TAF) 3 via the wireless channel control part (MTF1) 1, the wireless channel control part (MTF2) 2 transmits to the common adapter part (TAF) 3 an MTF switch complete message NT3 for notifying the completion of the handover procedure. Then, the handover procedure between systems in the wireless channel control part (MTF2) 2 is completed (Fig. 4, steps ST 26 through ST 31). Here, "other handover processes" in the steps ST23, ST27, ST32, ST33 refer to the same processes of the steps ST5 and ST7 of Fig. 3, and "other processes" in the step ST34 refer to the same processes of the step ST11 of Fig. 3.

Upon receiving the MTF switch complete message NT3 from the wireless channel control part (MTF2) 2, the common adapter part (TAF) 3 resumes the paused user data (U-plane) communication with the wireless channel control part (MTF2) 2 which is the destination MTF (Fig. 1, step S5; Fig. 5, steps ST44 to ST45). This completes the handover procedure inside the mobile station 6 (Fig. 1, step S6; Fig. 5, step ST46). Further, when steps ST41 and ST44 of Fig. 5 both render No, other processes unrelated to the handover are executed (Fig. 5, step ST47). Afterwards, the procedure goes back to the determination process of the step ST41.

As a result, states CM3a, CM3b are realized where the common adapter part (TAF) 3 is in communication with the mobile network (NW2) 8 in the second wireless access system via the wireless channel control part (MTF2) 2 in the second wireless access system.

According to the mobile station, the telecommunications method and the telecommunications system of the present embodiment, when the wireless channel control part (MTF1) 1 receives the handover request from the corresponding mobile network (NW1) 7, the wireless channel control part (MTF2) 2 communicates with the corresponding mobile network (NW2) 8 to complete the handover procedure on the wireless channel, and the common adapter part (TAF) 3 switches to the communication with the wireless channel control part (MTF2) 2. Therefore, the handover between different methods in the mobile station employing the MT-TA interface description can be executed appropriately.

### Second Embodiment

This embodiment is a variation of the mobile station, the telecommunications method and the telecommunications system of the first embodiment. This embodiment describes a case wherein communication parameters which are used between the wireless access system and the common adapter part (TAF) 3, such as a kind of the voice CODEC used for a voice communication and a communication speed, are to be changed with a handover procedure, the common adapter part (TAF) 3 is notified of the parameter information.

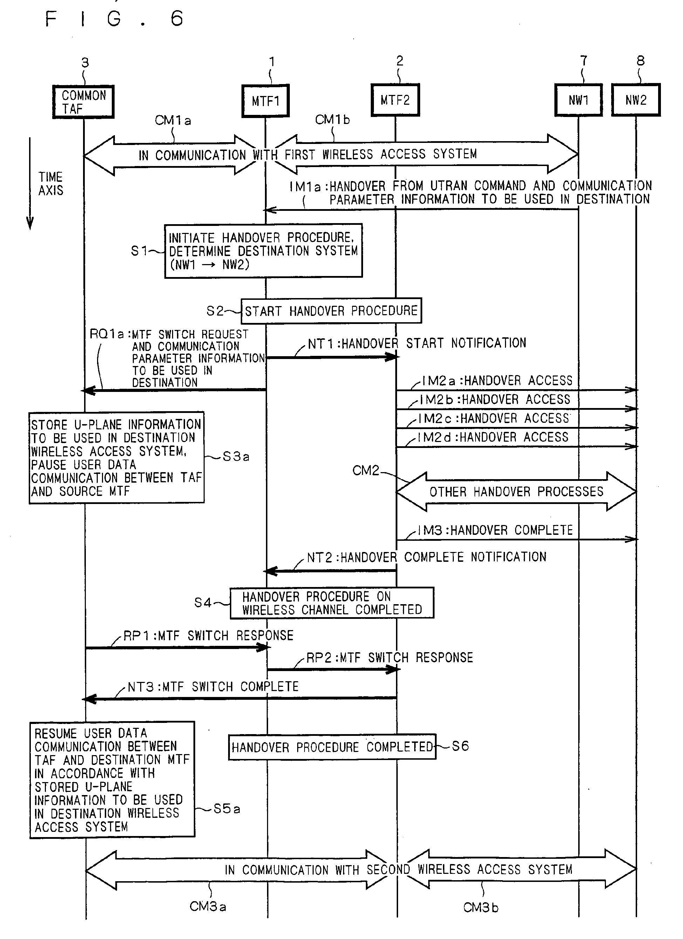

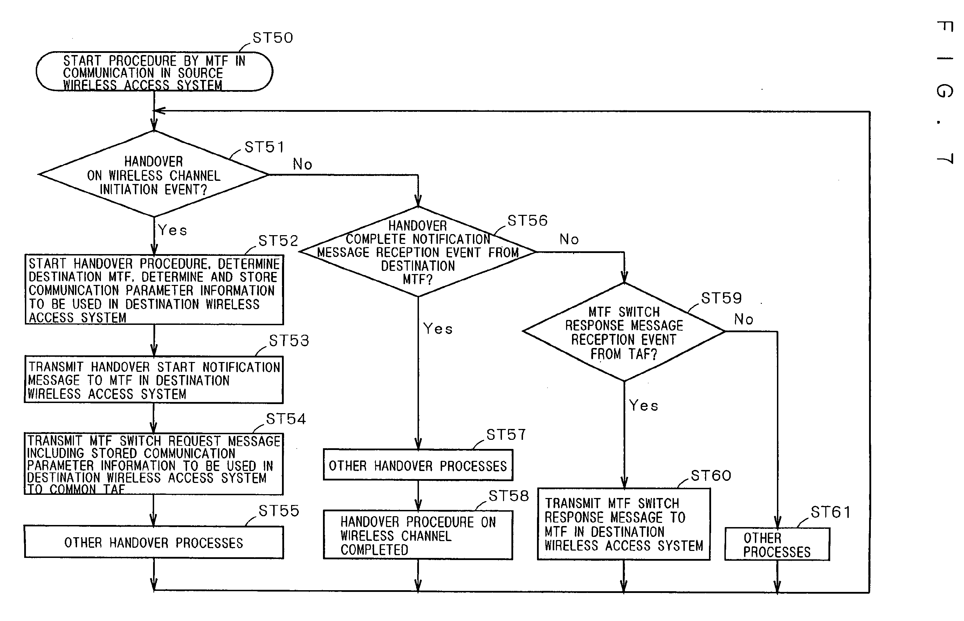

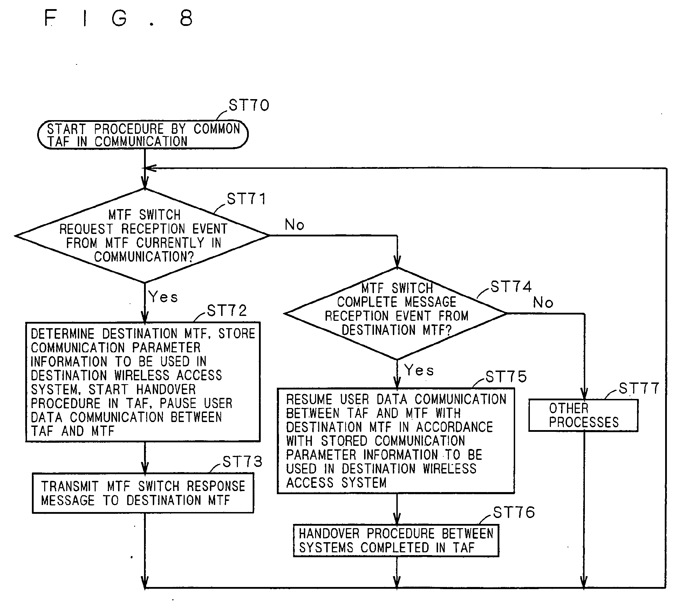

Fig. 6 is a sequence flow chart of the present embodiment. Fig. 7 is a flow chart illustrating processes of the wireless channel control part (MTF1) 1 shown in the sequence flow chart of Fig. 6. Fig. 8 is a flow chart illustrating processes of the common adapter part (TAF) 3 shown in the sequence flow chart of Fig. 6.

In Fig. 6, the wireless channel control part (MTF1) 1 which is a source MTF receives from the mobile network (NW1) 7 a wireless signal for initiating a handover, for example, a HANDOVER FROM UTRAN COMMAND message IM1a defined by 3GPP TS25.331. Upon receiving the signal, the wireless channel control part (MTF1) 1 initiates a handover procedure, determines a destination wireless access system, and determines a destination MTF inside the mobile station (Fig. 6, step S1; Fig. 7, steps ST50, ST 51 to ST52).

Here, the HANDOVER FROM UTRAN COMMAND message IM1a includes, as defined by 3GPP TS25.331, communication parameter information to be used in the destination wireless access system. The communication parameter includes at least either information about a kind of the voice CODEC or information about a communication speed.

The wireless channel control part (MTF1) 1 initiates the handover procedure, determines the destination MTF, and further stores communication parameter information which is included in the wireless signal to be used in the destination wireless access system (Fig. 7, step ST52).

Next, the handover start notification message NT1 is transmitted to the wireless channel control part (MTF2) 2 (Fig. 7, step ST53). The wireless channel control part (MTF1) 1 notifies the common adapter part (TAF) 3 currently in communication of an MTF switch request message RQ1a which includes the stored communication parameters and information on the destination MTF (Fig. 7, step ST54). Afterwards, the same actions as those of the wireless channel control part (MTF1) 1 described in the first embodiment are taken.

The wireless channel control part (MTF2) 2 also takes the same actions as those described in the first embodiment.

Upon receiving the MTF switch request message RQ1a from the wireless channel control part (MTF1) 1, the common adapter part (TAF) 3 stores the communication parameters to be used in the destination wireless access system included in the message, determines the destination MTF based on the information regarding the destination MTF, and pauses the user data (U-plane) communication between the source MTF and the common adapter part (TAF) 3 (Fig. 6, step S3a; Fig. 8, steps ST70, ST71 to ST72).

Next, the common adapter part (TAF) 3 transmits the MTF switch response message RP1 to the wireless channel control part (MTF1) 1, and prompts the wireless channel control part (MTF1) 1 to transmit the MTF switch response message RP2 to the wireless channel control part (MTF2) 2 which is the destination MTF (Fig. 8, step ST73).

Upon receiving the MTF switch complete message NT3 from the wireless channel control part (MTF2) 2, the common adapter part (TAF) 3 executes settings, for example, regarding the kind of the voice CODEC and the communication speed, in accordance with the stored communication parameters to be used in the destination wireless access system, and resumes the paused user data (U-plane) communication with the wireless channel control part (MTF2) 2 which is the destination MTF. This completes the handover procedure inside the mobile station (Fig. 6, step S5a; Fig. 8, steps ST74 through ST76).

According to the mobile station, the telecommunications method and the telecommunications system of the present embodiment, after changing communication settings based on communication parameter information, the common adapter part (TAF) 3 switches from a communication with the wireless channel control part (MTF1) 1 to a communication with the wireless channel control part (MTF2) 2. Therefore, even when communication settings are different between the source and the destination, the handover between different methods can be executed appropriately.

### Third Embodiment

This embodiment is also a variation of the mobile station, the telecommunications method and the telecommunications system of the first embodiment. This embodiment relates to a case wherein a failure in handover prompts reverting to the source wireless access system.

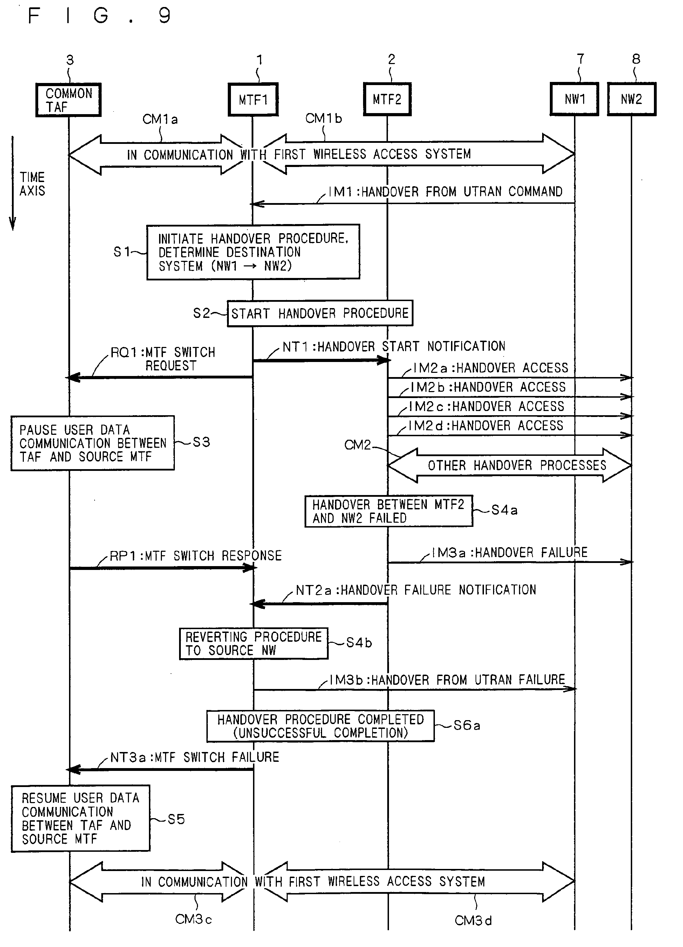

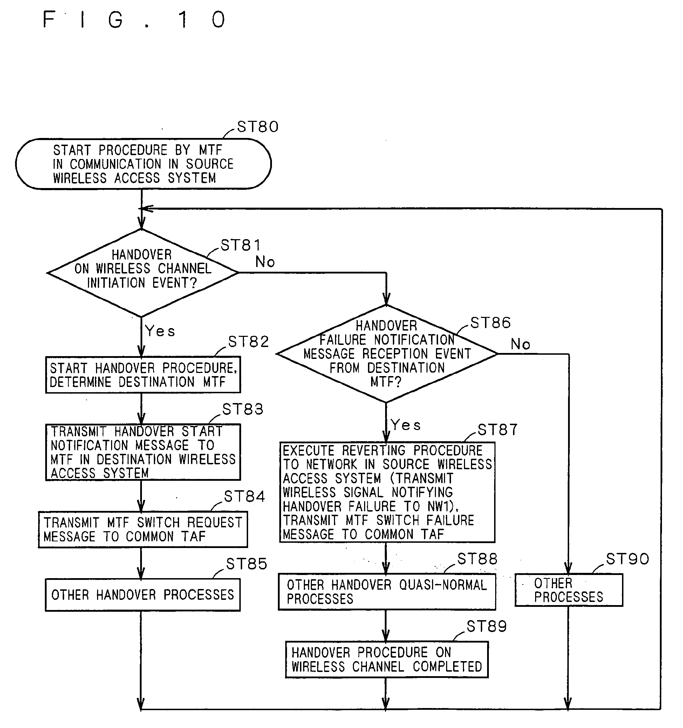

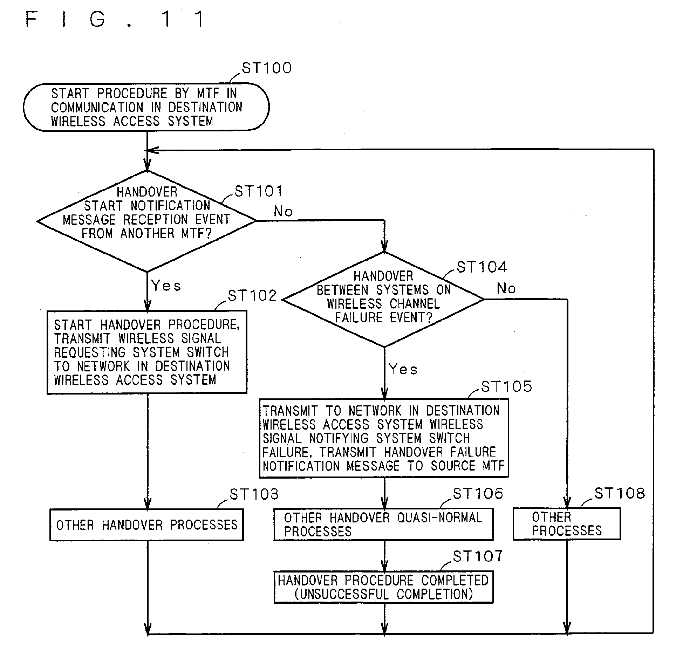

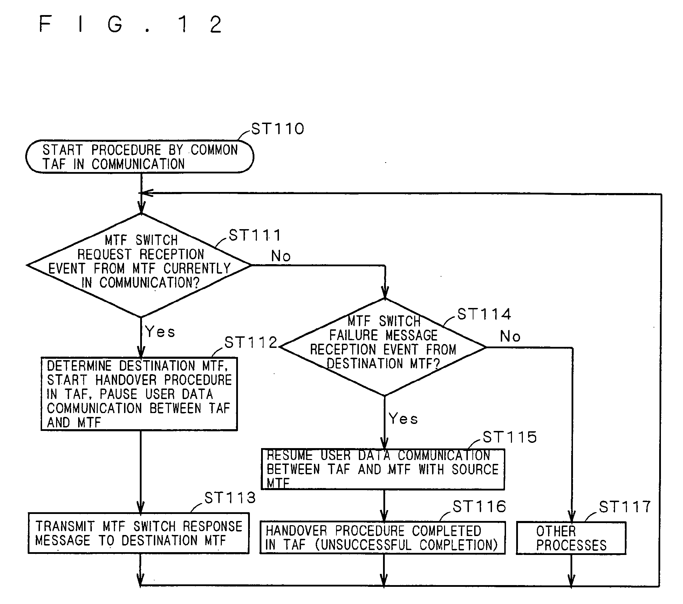

Fig. 9 is a sequence flow according to the present embodiment. Fig. 10 is a flow chart illustrating processes of the wireless channel control part (MTF1) 1 as shown in the sequence flow chart of Fig. 9. Fig. 11 is a flow chart illustrating processes of the wireless channel control part (MTF2) 2 as shown in the sequence flow chart of Fig. 9. Fig. 12 is a flow chart illustrating processes of the common adapter part (TAF) 3 as shown in the sequence flow chart of Fig. 9. It is noted that the processes related to a successful handover that have been described in the first embodiment are omitted from respective flow charts of Figs. 10 through 12.

Next, description of performance is given. Description of the same performances as in the first embodiment is omitted accordingly.

In Fig. 9, the wireless channel control part (MTF1) 1 which is the source MTF receives from the mobile network (NW1) 7 a wireless signal for initiating a handover, for example, the HANDOVER FROM UTRAN COMMAND message IM1 defined by 3GPP TS25.331. Upon receiving the signal, the wireless channel control part (MTF1) 1 initiates a handover procedure, determines a destination wireless access system, and determines a destination MTF inside the mobile station (Fig. 9, step S1; Fig. 10, steps ST80, ST81 to ST82).

Next, the handover procedure is started between the wireless channel control part (MTF1) 1 and the wireless channel control part (MTF2) 2 (Fig. 9, step S2). In this embodiment, the wireless channel control part (MTF2) 2 which belongs to the second wireless access system including the mobile network (NW2) 8 is the destination MTF. Therefore, the wireless channel control part (MTF1) 1 transmits the handover start notification message NT1 to the wireless channel control part (MTF2) 2 (Fig. 10, step ST83).

The wireless channel control part (MTF1) 1 transmits to the common adapter part (TAF) 3 currently in communication the MTF switch request message RQ1 including information on the destination MTF (Fig. 10, step ST84).

When the wireless channel control part (MTF2) 2 which is the destination MTF receives the handover start notification message NT1 from the wireless channel control part (MTF1) 1, the wireless channel control part (MTF2) 2 starts the handover procedure and transmits to the mobile network (NW2) 8 a wireless signal for switching wireless access systems, for example, HANDOVER ACCESS messages IM2a to IM2d defined by 3GPP TS04.18 (Fig. 11; steps ST100, ST101 to ST102). Though this message is transmitted four times according to 3GPP TS04.18, in some cases this is omitted.

Upon receiving the MTF switch request message RQ1 from the wireless channel control part (MTF1) 1, the common adapter part (TAF) 3 determines the destination MTF based on the information regarding the destination MTF included in the message and pauses the user data (U-plane) communication between the source MTF and the common TAF (Fig. 12, steps ST111, ST112).

Next, the common adapter part (TAF) 3 transmits the MTF switch response message RP1 to the wireless channel control part (MTF1) 1, and prompts the wireless channel control part (MTF1) 1 to transmit the MTF switch response message RP2 to the wireless channel control part (MTF2) 2 which is the destination MTF (Fig. 12, step ST113).

When the handover procedure between the wireless channel control part (MTF2) 2 and the mobile network (NW2) 8 fails, the wireless channel control part (MTF2) 2 transmits to the mobile network (NW2) 8 a wireless signal for notifying the failure of handover, for example, a HANDOVER FAILURE message IM3a defined by 3GPP TS04.18. It is noted that depending on the content of the handover failure, this wireless signal is omitted in some cases.

Afterwards, the wireless channel control part (MTF2) 2 transmits a handover failure notification message NT2a to the wireless channel control part (MTF1) 1 which is the source MTF (Fig. 11, steps ST104, ST105).

When the wireless channel control part (MTF1) 1 and the wireless channel control part (MTF2) 2 logically exist inside the mobile station, it is possible to notify the wireless channel control part (MTF1) 1 that the handover failed without transmitting the handover failure notification message NT2a. This is because the notification of handover failure can be made on software from the wireless channel control part (MTF1) 1 to the wireless channel control part (MTF2) 2.

Upon receiving the handover failure notification message NT2a from the wireless channel control part (MTF2) 2, the wireless channel control part (MTF1) 1 executes a reverting procedure to the mobile network (NW1) 7 which is the source wireless access system. At the same time, the wireless channel control part (MTF1) 1 transmits to the mobile network (NW1) 7 a wireless signal for notifying the failure of the handover, for example, a HANDOVER FROM UTRAN FAILURE message IM3b defined by 3GPP TS25.331, and transmits an MTF switch failure message NT3a to the common adapter part (TAF) 3 (Fig. 10, steps ST86, ST87).

Upon receiving the MTF switch failure message NT3a from the wireless channel control part (MTF1) 1, the common adapter part (TAF) 3 resumes the posed user data (U-plane) communication with the wireless channel control part (MTF1) 1 which is the source MTF, and completes the reverting procedure at the time of handover failure between systems inside the mobile station (Fig. 9, step S5; Fig. 12, steps S 114 through S116).

Additionally, "handover quasi-normal processes" in Fig. 10, step ST88 and Fig. 11, step ST106 refers to a recovery procedure necessary for reverting at the time of handover failure.

Other operations are the same as described in the first embodiment and the description thereof is omitted.

According to the mobile station, the telecommunications method and the telecommunications system of the present embodiment, when the handover procedure on wireless channel does not complete but failed, the wireless channel control part (MTF1) 1 receives the handover procedure failure notification and communicates with the corresponding mobile network (NW1) 7 to perform the reverting procedure, and the common adapter part (TAF) 3 receives the handover procedure failure notification from the wireless channel control part (MTF1) 1 and resumes the communication with the wireless channel control part (MTF1) 1. This allows the communication to continue in some cases, even when the handover procedure fails.

### Fourth Embodiment

The present embodiment relates to a telecommunications system including a mobile station and a telecommunications method which do not employ the MT-TA Interface description defined by the non-patent document 1, for example, Radio Interface Protocol Architecture defined by the non-patent document 2. This system enables an execution of a handover between MTFs employing a different wireless communications method, and further prevents unpleasant noise upon a handover from being heard by a user.

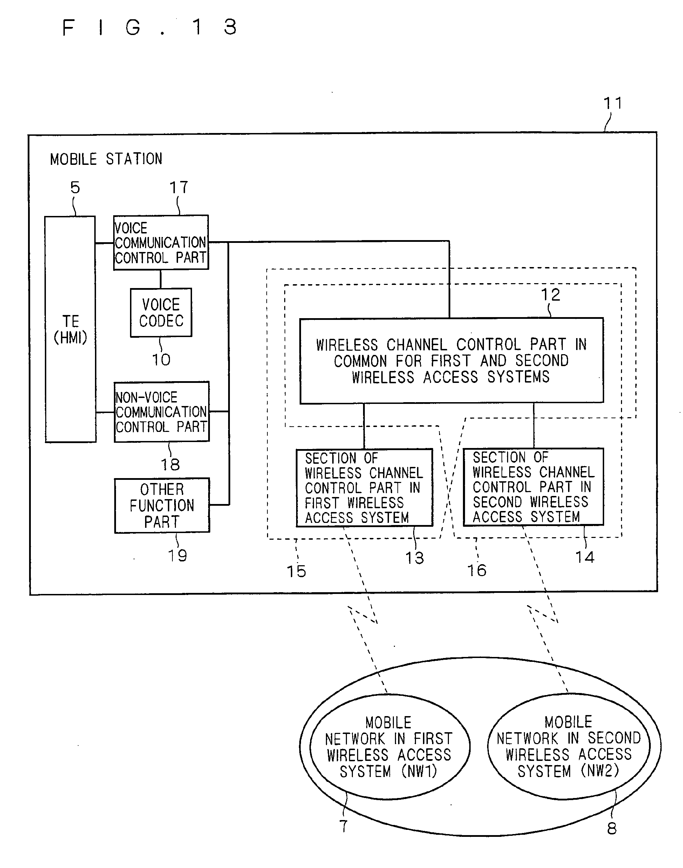

Fig. 13 illustrates a structure of a mobile station 11 which does not employ the MT-TA Interface description and its telecommunications system. In Fig. 13, a section 13 of the wireless channel control part for communicating with the mobile network (NW1) 7 in the first wireless access system, and a section 14 of the wireless channel control part for communicating with the mobile network (NW2) 8 in the second wireless access system correspond to, for example, sections which terminate Access Stratum defined by 3GPP TS25.301.

Further, a wireless channel control part 12 provided in common for the first and second wireless access systems correspond to, for example, a section which terminates Non-Access Stratum defined by 3GPP TS25.301. The common wireless channel control part 12 and the section 13 of the wireless channel control part constitute a wireless channel control part 15 in the first wireless access system. The common wireless channel control part 12 and the section 14 of the wireless channel control part constitute a wireless channel control part 16 in the second wireless access system.

A voice communication control part 17 is responsible for a voice communication function inside the mobile station 11. The voice communication control part 17 is connected to the wireless channel control part 12 provided in common for the first and second wireless access systems and further connected to the voice CODEC 10. Though the voice communication control part 17 and the voice CODEC 10 are shown as a separate component in this exemplary structure, the voice CODEC 10 may exist inside the voice communication control part 17.

The mobile station 11 is also provided with a non-voice communication control part 18 which is responsible for non-voice communication functions, for example, a packet telecommunication and a MODEM telecommunication. The mobile station 11 is further provided with other function part 19 which is responsible for functions other than voice and non-voice communications. Moreover, the voice communication control part 17 and the non-voice communication control part 18 are both connected to the TE (HMI) 5.

Next, description of operation is given.

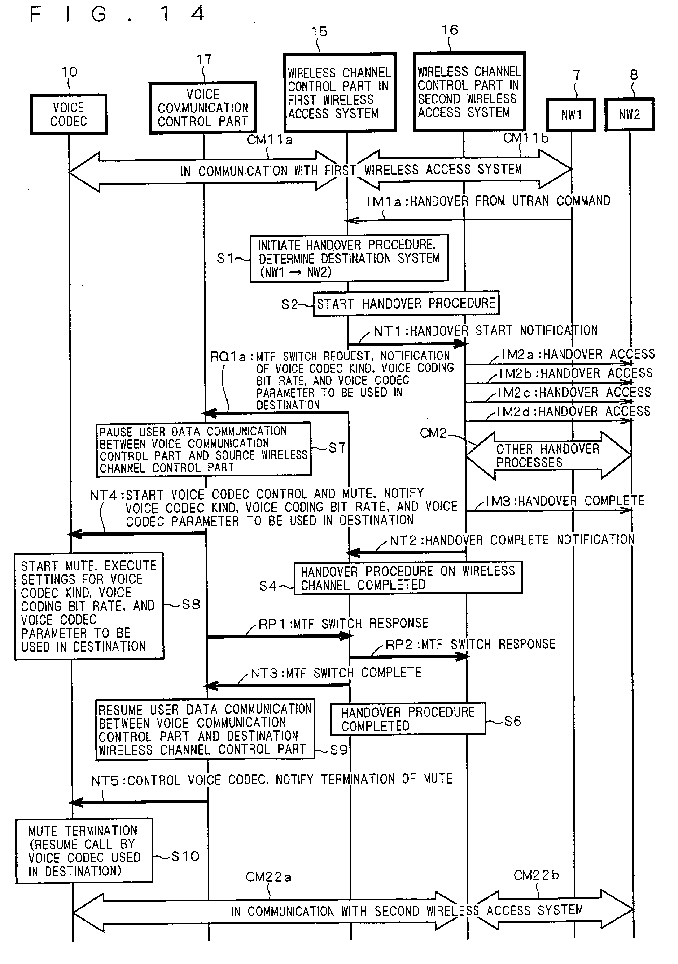

Fig. 14 is a sequence flow chart illustrating processes of a handover between different methods executed by the mobile station 11 according to the present embodiment. Fig. 14 illustrates an execution of a handover from a state where the voice communication control part 17 is in voice communication with the mobile network (NW1) 7 in the first wireless access system via the wireless channel control part 15 in the first wireless access system to a state where voice communication is made with the mobile network (NW2) 8 in the second wireless access system via the wireless channel control part 16 in the second wireless access system.

As shown in Fig. 14, operations between the voice communication control part 17 and the wireless channel control part 15 in the first wireless access system are the same as the operations between the common adapter part (TAF) 3 and the wireless channel control part (MTF1) 1 as described in the first embodiment. Also, operations between the voice communication control part 17 and the wireless channel control part 16 in the second wireless access system are the same as the operations between the common adapter part (TAF) 3 and the wireless channel control part (MTF2) 2 as described in the first embodiment. Therefore, detailed description of the handover procedure is omitted here. In the following, description of only operations characteristic of the present embodiment is given.

Upon receiving the MTF switch request message RQ1a (including not only the MTF switch request message but also information regarding the kind of the voice CODEC, a voice coding bit rate, and a voice CODEC parameter to be used in the destination), the voice communication control part 17 pauses the user data (U-plane) communication between the source wireless channel control part 15 and the voice communication control part 17 (Fig. 14, step S7). At the same time, the voice communication control part 17 stores the information regarding the kind of the voice CODEC, the voice coding bit rate, and the voice CODEC parameter which is notified from the wireless channel control part 15 in order to be used in the destination wireless access system.

The voice communication control part 17 applies a mute control to the voice CODEC 10 so as not to output a sound, and transmits to the voice CODEC 10 a voice CODEC control message NT4 for notifying the stored information.

Upon receiving the voice CODEC control message NT4, the voice CODEC 10 executes the mute of the voice CODEC 10 in accordance with the content of the message and further sets the voice CODEC 10 based on the kind of the voice CODEC, the voice coding bit rate, and the voice CODEC parameter to be used in the destination wireless access system (Fig. 14, step S8).

Upon receiving the MTF switch complete message NT3, the voice communication control part 17 resumes the user data (U-plane) communication between the wireless channel control part 16 which is the destination and the voice communication control part 17 (Fig. 14, step S9). At the same time, the voice communication control part 17 notifies the voice CODEC 10 of a voice CODEC control message NT5 for terminating the mute of the voice CODEC 10.

Upon receiving the voice CODEC control message NT5, the voice CODEC 10 terminates the mute of the voice CODEC in accordance with the content of the message and resumes the voice communication with the destination wireless access system.

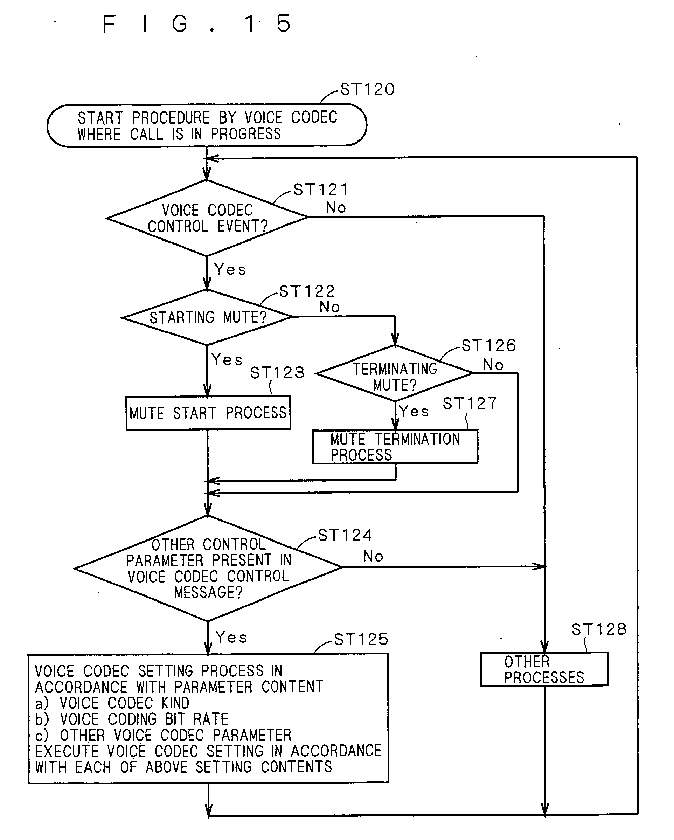

Fig. 15 is a flow chart illustrating examples of processes of the voice CODEC 10 as shown in Figs. 13 and 14. In Fig. 15, upon receiving the voice CODEC control message NT4, the voice CODEC 10 analyses contents of the control message (Fig. 15, steps ST120, ST121, ST122, ST124 and ST126). When the voice CODEC control message NT4 includes an instruction of starting or terminating mute of the voice CODEC 10, each instruction is executed (Fig. 15, steps ST123 and ST127).

When information regarding a parameter to be set in the voice CODEC 10 exists in the voice CODEC control message NT4, a setting process is executed to the voice CODEC 10 in accordance with the content of the message (Fig. 15, step ST125). When the setting process is completed, the procedure goes back to the determination process of the step ST121.

When the step ST121 denies an acknowledgment of a voice CODEC control event, other processes except the voice CODEC control is executed (Fig. 15, step ST128) and the procedure goes back to the determination process of the step ST121.

According to the mobile station, the telecommunications method and the telecommunications system of the present embodiment, when the wireless channel control part 15 receives a handover request from the corresponding mobile network (NW1) 7, the wireless channel control part 16 communicates with the corresponding mobile network (NW2) 8 and completes the handover procedure on wireless channel. Then, the voice communication control part 17 applies a mute control to the voice CODEC 10 so as not to output a sound. When the handover procedure on wireless channel is completed, the voice communication control part 17 switches to a communication between the wireless channel control part 16 and the voice communication control part 17, and removes the mute control to the voice CODEC 10. In this way, an unpleasant noise upon a handover is not heard by a user.

While the invention has been shown and described in detail, the foregoing description is in all aspects illustrative and not restrictive. It is therefore understood that numerous modifications and variations can be devised without departing from the scope of the invention.

### Industrial Applicability

The present invention is applicable to a communications equipment including a plurality of wireless channel control parts of different methods, for example, to communications equipments such as a mobile telephone, a transceiver, PDA (Personal Digital Assistance), or a notebook computer.

## Claims

1. A mobile station employing an MT-TA Interface description defined by ARIB (Association of Radio Industries and Businesses) TR-T12-27.A02, said mobile station comprising:
a plurality of MTFs (Mobile Termination Function) (1, 2); and
a TAF (Terminal Adaptation Function) (3) which is an adaptor portion between a TE (Terminal Equipment) (5) having an HMI (Human Machine Interface) and each of said plurality ofMTFs; wherein
each of said plurality of MTFs is a wireless channel control part employing a different wireless communications method,
one of said plurality of MTFs (1), when receiving a handover request (IM1) from a corresponding network (7), transmits to another of said plurality of MTFs (2) and to said TAF (3) notifications (NT1, RQ1) that a handover procedure to said another of said plurality of MTFs (2) is started,
said another of said plurality of MTFs (2), upon receiving said handover procedure start notification (NT1), communicates with another corresponding network (8) to complete a handover procedure on a wireless channel (IM2a through IM2d, IM3), and transmits to said TAF (3) a notification (NT3) that said handover procedure on said wireless channel is completed,
said TAF, upon receiving said handover procedure start notification (RQ1), pauses a communication with said one of said plurality of MTFs (1) (S3), and upon receiving said notification (NT3) that said handover procedure on said wireless channel is completed, switches to a communication with said another of said plurality of MTFs (2) (RP1, RP2, NT3, S5).

2. The mobile station according to claim 1, wherein
said handover request (IM1a) includes information regarding a communication parameter between said TAF (3) and said another network (8) which is a destination,
said communication parameter includes at least either information regarding a kind of a voice CODEC in said TAF, or information regarding a communication speed between said TAF and said another network (8) which is the destination,
said one of said plurality of MTFs (1) further transmits said information (NT1, RQ1) regarding said communication parameter to said TAF (3),
said TAF (3), after changing a setting regarding a communication based on said information regarding said communication parameter (S3a, S5a), switches to a communication with said another of said plurality of MTFs (2) (RP1, RP2, NT3).

3. The mobile station according do claim 1, wherein
when said handover procedure on said wireless channel does not complete and fails, said another of said plurality of MTFs (2) transmits a handover procedure failure notification (NT2a) to said one of said plurality of MTFs (1),
said one of said plurality of MTFs (1), upon receiving said handover procedure failure notification (NT2a), communicates with said corresponding network (7) to execute a reverting procedure (S4b),
said TAF, upon receiving said handover procedure failure notification (NT3a) from said one of said plurality of MTFs (1), resumes a communication with said one of said plurality of MTFs (1) (S5).

4. A telecommunications method using a mobile station employing an MT-TA Interface description defined by ARIB (Association of Radio Industries and Businesses) TR-T12-27.A02,
said mobile station comprising:
a plurality of MTFs (Mobile Termination Function) (1, 2); and
a TAF (Terminal Adaptation Function) (3) which is an adaptor portion between a TE (Terminal Equipment) (5) having an HMI (Human Machine Interface) and each of said plurality of MTFs; wherein
each of said plurality of MTFs is a wireless channel control part employing a different wireless communications method,
said method comprising the steps of:
(a) prompting one of said plurality of MTFs (1) to transmit to another of said plurality of MTFs (2) and to said TAF (3) notifications (NT1, RQ1) that a handover procedure to said another of said plurality of MTFs (2) is started, when said one of said plurality of MTFs (1) receives a handover request (IM1) from a corresponding network (7);
(b) prompting said another of said plurality of MTFs (2) to communicate with another corresponding network (8) to complete a handover procedure on a wireless channel (IM2a through IM2d, IM3), and transmit to said TAF (3) a notification (NT3) that said handover procedure on said wireless channel is completed, when said another of said plurality of MTFs (2) receives said handover procedure start notification (NT1); and
(c) prompting said TAF (3) to pause a communication with said one of said plurality of MTFs (1) (S3) when said TAF (3) receives said handover procedure start notification (RQ1), and to switch to a communication with said another of said plurality of MTFs (2) (RP1, RP2, NT3, S5) when said TAF (3) receives said notification (NT3) that said handover procedure on said wireless channel is completed.

5. The telecommunications method according to claim 4, wherein
said handover request (IM1a) includes information regarding a communication parameter between said TAF (3) and said another network (8) which is a destination,
said communication parameter includes at least either information regarding a kind of a voice CODEC in said TAF, or information regarding a communication speed between said TAF and said another network (8) which is a destination,
said one of said plurality of MTFs (1) further transmits said information (NT1, RQ1) regarding said communication parameter to said TAF (3),
said TAF (3), after changing a setting regarding a communication based on said information regarding said communication parameter (S3a, S5a), switches to a communication with said another of said plurality of MTFs (2) (RP1, RP2, NT3).

6. The telecommunications method according to claim 4, wherein
when said handover procedure on said wireless channel does not complete and fails, said another of said plurality of MTFs (2) transmits a handover procedure failure notification (NT2a) to said one of said plurality of MTFs (1),
said one of said plurality of MTFs (1), upon receiving said handover procedure failure notification (NT2a), communicates with said corresponding network (7) to execute a reverting procedure (S4b),
said TAF, upon receiving said handover procedure failure notification (NT3a) from said one of said plurality of MTFs (1), resumes a communication with said one of said plurality of MTFs (1) (S5).

7. A telecommunications system, comprising:
a mobile station (6) employing an MT-TA Interface description defined by ARIB (Association of Radio Industries and Businesses) TR-T12-27.A02;
a network (7); and
another network (8), wherein
said mobile station comprises:
a plurality of MTFs (Mobile Termination Function) (1, 2); and
a TAF (Terminal Adaptation Function) (3) which is an adaptor portion between a TE (Terminal Equipment) (5) having an HMI (Human Machine Interface) and each of said plurality ofMTFs; wherein
each of said plurality of MTFs is a wireless channel control part employing a different wireless communications method,
one of said plurality of MTFs (1), when receiving a handover request (IM1) from said corresponding network (7), transmits to another of said plurality of MTFs (2) and to said TAF (3) notifications (NT1, RQ1) that a handover procedure to said another of said plurality of MTFs (2) is started,
said another of said plurality of MTFs (2), upon receiving said handover procedure start notification (NT1), communicates with said another corresponding network (8) to complete a handover procedure on a wireless channel (IM2a through IM2d, IM3), and transmits to said TAF (3) a notification (NT3) that said handover procedure on said wireless channel is completed,
said TAF, upon receiving said handover procedure start notification (RQ1), pauses a communication with said one of said plurality of MTFs (1) (S3), and upon receiving said notification (NT3) that said handover procedure on said wireless channel is completed, switches to a communication with said another of said plurality of MTFs (2) (RP1, RP2, NT3, S5).

8. The telecommunications system according to claim 7, wherein
said handover request (IM1a) includes information regarding a communication parameter between said TAF (3) and said another network (8) which is a destination,
said communication parameter includes at least either information regarding a kind of a voice CODEC in said TAF, or information regarding a communication speed between said TAF and said another network (8) which is a destination,
said one of said plurality of MTFs (1) further transmits said information (NT1, RQ1) regarding said communication parameter to said TAF (3),
said TAF (3), after changing a setting regarding a communication based on said information regarding said communication parameter (S3a, S5a), switches to a communication with said another of said plurality of MTFs (2) (RP1, RP2, NT3).

9. The telecommunications system according to claim 7, wherein
when said handover procedure on said wireless channel does not complete and fails, said another of said plurality of MTFs (2) transmits a handover procedure failure notification (NT2a) to said one of said plurality of MTFs (1),
said one of said plurality of MTFs (1), upon receiving said handover procedure failure notification (NT2a), communicates with said corresponding network (7) to execute a reverting procedure (S4b),
said TAF, upon receiving said handover procedure failure notification (NT3a) from said one of said plurality of MTFs (1), resumes a communication with said one of said plurality of MTFs (1) (S5).

10. A mobile station, comprising:
a plurality of wireless channel control parts (15, 16); and
a voice communication control part (17) for controlling a voice CODEC (10); wherein
each of said plurality of wireless channel control parts (15, 16) is a wireless channel control part employing a different wireless communications method,
one of said plurality of wireless channel control parts (15), when receiving a handover request (IM1) from a corresponding network (7), transmits to another of said plurality of wireless channel control parts (16) and to said voice communication control part (17) notifications (NT1, RQ1a) that a handover procedure to said another of said plurality of wireless channel control parts (16) is started,
said another of said plurality of wireless channel control parts (16), upon receiving said handover procedure start notification (NT1), communicates with another corresponding network (8) to complete a handover procedure on a wireless channel (IM2a through IM2d, IM3),
said voice communication control part (17), upon receiving said handover procedure start notification (RQ1a), pauses a communication between said one of said plurality of wireless channel control parts (15) and said voice communication control part (17) (S7) and applies a mute control to said voice CODEC so as not to output a sound (NT4, S8), and when said handover procedure on said wireless channel is completed, switches to a communication between said another of said plurality of wireless channel control parts (16) and said voice communication control part (17) (RP1, RP2, NT3, S9) and removes said mute control to said voice CODEC (NT5, S10).

11. A telecommunications method using a mobile station (11),
said mobile station (11) comprising:
a plurality of wireless channel control parts (15, 16); and
a voice communication control part (17) for controlling a voice CODEC (10); wherein
each of said plurality of wireless channel control parts (15, 16) is a wireless channel control part employing a different wireless communications method,
said method comprising the steps of:
(a) prompting one of said plurality of wireless channel control parts (15) to transmit to another of said plurality of wireless channel control parts (16) and to said voice communication control part (17) notifications (NT1, RQ1a) that a handover procedure to said another of said plurality of wireless channel control parts (16) is started, when said one of said plurality of wireless channel control ports (15) receives a handover request (IM1) from a corresponding network (7);
(b) prompting said another of said plurality of wireless channel control parts (16) to communicate with another corresponding network (8) to complete a handover procedure on a wireless channel (IM2a through IM2d, IM3), when said another of said plurality of wireless channel control parts (16) receives said handover procedure start notification (NT1); and
(c) prompting said voice communication control part (17) to pause a communication between said one of said plurality of wireless channel control parts (15) and said voice communication control part (17) and apply a mute control to said voice CODEC so as not to output a sound (NT4, S8) when said voice communication control part (17) receives said handover procedure start notification (RQ1a), and switch to a communication between said another of said plurality of wireless channel control parts (16) and said voice communication control part (17) (RP1, RP2, NT3, S9) and remove said mute control to said voice CODEC (NT5, S10), upon completion of said handover procedure on said wireless channel.

12. A telecommunications system, comprising:
a mobile station (11),
a network (7); and
another network (8), wherein
said mobile station comprises:
a plurality of wireless channel control parts (15, 16); and
a voice communication control part (17) for controlling a voice CODEC (10); wherein
each of said plurality of wireless channel control parts (15, 16) is a wireless channel control part employing a different wireless communications method,
one of said plurality of wireless channel control parts (15), when receiving a handover request (IM1) from said corresponding network (7), transmits to another of said plurality of wireless channel control parts (16) and to said voice communication control part (17) notifications (NT1, RQ1a) that a handover procedure to said another of said plurality of wireless channel control parts (16) is started,
said another of said plurality of wireless channel control parts (16), upon receiving said handover procedure start notification (NT1), communicates with said another corresponding network (8) to complete a handover procedure on a wireless channel (IM2a through IM2d, IM3),
said voice communication control part (17), upon receiving said handover procedure start notification (RQ1a), pauses a communication between said one of said plurality of wireless channel control parts (15) and said voice communication control part (17) (S7) and applies a mute control to said voice CODEC so as not to output a sound (NT4, S8), and upon completion of said handover procedure on said wireless channel, switches to a communication between said another of said plurality of wireless channel control parts (16) and said voice communication control part (17) (RP1, RP2, NT3, S9) and removes said mute control to said voice CODEC (NT5, S10).
